# EUROPEAN PATENT SPECIFICATION

(11) **EP 2 575 223 B1**
(45) Date of publication and mention of the grant of the patent: **30.03.2016**
(21) Application number: 12186421.9
(22) Date of filing: 27.09.2012
(51) Int. Cl.: H02G 3/18, H02G 3/38

(54) **An embedment box for hollow floor structure as well as a method for the mounting of the same**
Eine Einbaudose für Hohlboden und Verfahren zur seiner Montage
Une boîte d'encastrement pour plancher creux et sa méthode d'installation

(30) Priority: 28.09.2011 SE 1150892
(43) Date of publication of application: 03.04.2013
(73) Proprietor: Schneider Electric Industries SAS, 92500 Rueil-Malmaison (FR)
(72) Inventor: ERIKSSON, Staffan, 611 56 NYKÖPING (SE)
(74) Representative: Groth & Co. KB

(56) References cited:
- WO-A1-90/09692
- WO-A1-03/104587
- GB-A- 2 257 846
- US-A1- 2006 027 386
- US-A1- 2008 264 667

## Description

### Technical Field

The present invention relates to the area of the installation of electrically conducting cables in floor structures and particularly in hollow floor structures.

### Background of the Invention

In the new production of blocks of offices, prefabricated hollow floor structures, so-called HDF floor structures, are often used for providing the different floor plans. The floor structures are delivered in lengths of up to 12 m having 4 to 6 longitudinal tubular hollow spaces, the floor structure is formed in such a way that no additional reinforcement of its strength is needed, which means that, in order to complete the floor, it is desired to apply as little self-levelling screed/concrete as possible, which means a layer from a few centimetres or more.

Existing embedment systems of connection boxes require a topping of self-levelling screed/concrete from 70 mm to at least 100 mm. The problem of said embedment systems is that the internal space in the floor box mounted in the embedment box for plug connection then becomes limited, which results in the lid of the floor box not being possible to close. An adjustable embedment box according to the preamble of claim 1 is known from WO 90/09692.

### The Object of the Invention

The object of the present invention is to provide an embedment box of a hollow floor structure, which solves the above-mentioned problems by affording considerably more generous mounting volumes for the electrical installations than what previously has been the case.

The object is further to provide a mounting device for an embedment box in such a hollow floor structure.

The object is further to provide such a mounting device that gives the possibility of pre-setting the vertical level of the box in relation to the hollow floor structure.

### Summary of the Invention

By the present invention, as the same is seen in the independent claim, the above-mentioned objects are met, whereby said disadvantages have been eliminated. Suitable embodiments of the invention are defined in the dependent claims.

The invention is based on using the longitudinal channels in the hollow floor structure for the installation of floor boxes and also for the cabling in the longitudinal channels thereof, without, by this installation and cabling, altering the strength of the hollow floor structure. This is provided by mounting an embedment box in the hollow floor structure. Cabling in another direction than in the longitudinal channels of the floor structure may be carried out in partition walls or in false ceilings of the floor plan below. In addition, cablings may be effected transversely to the hollow space channels of the floor structure by the embedment box having connections for cabling ducts also on the upper side.

The invention concerns an embedment box of a hollow floor structure, which box comprises a bottom wall, side walls, and end walls as well as at least one top wall, which walls limit the inner volume of the box. At least one of said walls is provided with a breakout opening in which a tube adapter is mounted for the connection of a wiring tube for wiring/cabling. The top wall is provided with an upper part through which the inner volume of the box can be reached. Furthermore, the width of the box is smaller than the width of a channel in the hollow floor structure. The embedment box is further provided with level-fixing means connectable to the hollow floor structure. These members allow an adjustment of the vertical position of the box in relation to the floor structure. The members may be of varying design such as angle-irons that have been attached to the surface of the floor structure or pressing devices that operate between the wall/walls of the embedment box and the channel walls of the inside of the floor structure. They may also be formed to operate between the bottom of the embedment box and the bottom of the inside of the channel of the floor structure. It is also feasible that the members may be formed as wire devices, which by a rotary motion provides a level regulation of the embedment box. All embodiments of the level-fixing means may, however, be adjusted for different vertical positions of the embedment box.

In one embodiment of the embedment box, for the mounting in said hollow floor structure, the outside of some one of the walls of the embedment box is provided with at least one bracket attachment onto which an adjustable mounting bracket is mounted. The adjustability of the mounting bracket means that a fitter already upon the mounting of the box can adjust the same to an estimated final level of the finished concrete floor surface. This mounting may also be made for different installation alternatives of tubings, which optimizes the installation work considerably.

In one embodiment of the embedment box, the mounting bracket is rotatably and lockably connected to the bracket attachment. This rotatability further increases the installation alternatives by the fact that different vertical positions can be selected.

In one embodiment of the embedment box, the mounting bracket is formed as an L-shaped means having a first branch, provided with a position hole for the fastening to said bracket attachment, as well as a second branch, oriented 90° from the first branch and provided with at least one fixing hole for the fastening to the surface of the hollow floor structure. This angled design of the mounting bracket implies a very rigid clamping during an embedment procedure when the embedment box on no account must be dislodged from its position.

In one embodiment of the embedment box, the position hole of the first branch is formed as a slot having an extension in the direction of the first branch. This slot shape further increases the possibilities of more accurately determining the vertical position of the embedment box at the same time as four discrete positions can be selected by only one fixing screw.

In one embodiment of the embedment box, the fixing hole of the second branch is formed as a slot having an extension in the direction of the second branch. Also this slot shape makes it easier to select fastening place for a nail/screw/rivet/bolt in the concrete for the mounting bracket.

In one embodiment of the embedment box, the second branch is further provided with an additional one to four fixing holes, which are placed laterally displaced in the branch in relation to said position hole. Said additional fixing holes allow further fastening options or alternative fastening places for the mounting bracket against the concrete, which further increases the attachment possibilities.

In one embodiment of the embedment box, the walls of the box are provided with four bracket attachments each one of which provided with a mounted adjustable mounting bracket. By affording several fastening places, greater possibilities of adjustments as well as safer fixation are provided.

In one embodiment of the embedment box, the four bracket attachments are symmetrically placed in relation to the upper part of the box. A symmetrical placement of the brackets implies a favourable distribution of load upon the mounting of the entire embedment box.

In one embodiment of the embedment box, the upper part is rectangularly shaped, the bracket attachments being placed adjacent to the respective corners of the upper part. The placement of the brackets at the corners implies that the levelling into the horizontal position is facilitated.

In one embodiment of the embedment box, the upper part is provided with a levelling device. This device is a complement to the mounting brackets, which facilitates the fine adjustment to the horizontal position of the upper part and fine adjustment does not have to be made via the slots in the mounting bracket.

The invention also concerns a method for the mounting of an embedment box according to the embodiments presented above in a hollow floor structure. The method concerns the following mounting steps:
a) a hole is recessed in the hollow floor structure with a width that does not exceed the width of the hollow space width of the floor structure but that slightly exceeds the width of the embedment box,
b) at least one breakout opening of the embedment box is opened, in which a tube adapter and a wiring tube are mounted,
c) at least one adjustable mounting bracket is mounted onto the embedment box in a selected position for a coarse adjustment of the height of the embedment box in relation to the level of the surface of the hollow floor structure,
d) the embedment box is lowered into the recessed hole in the hollow floor structure as well as is adjusted longitudinally in the hole,
e) the embedment box is fixed in the upper side of the hollow floor structure by means of the mounting bracket,
f) the longitudinal channel of the hollow floor structure is closed on both sides of the box,
g) the gap around the embedment box is filled with concrete up to the level of the surface of the hollow floor structure.

In one embodiment of the method, the mounting step c) is replaced by at least one adjustable mounting bracket being mounted onto the embedment box in a selected position for a coarse adjustment of the height of the embedment box in relation to the level of the finished concrete floor, and the mounting step g) is replaced by concrete being filled into the gap around the embedment box and up to a level corresponding to the finished concrete floor. This modification allows that embedment and topping into the finished concrete floor is made simultaneously in one step on the same occasion, which eliminates the need of two concreting times.

In one embodiment of the method, some of the mounting steps a) to g) comprises that the level of the upper part of the embedment box is fine-adjusted. This fine adjustment is made either in the slots of the mounting brackets or by a separate levelling device. The fine adjustment provides a more accurate horizontal position of the embedment box and/or its upper part.

### Brief Description of the Drawings

Now, the invention will be described in more detail, reference being made in connection with the accompanying drawing figures. The drawing figures show only explanatory sketches intended to facilitate the understanding of the invention.
- Figure 1: shows a perspective view of an embedment box according to the present invention mounted in a hollow floor structure.
- Figure 2: shows only the embedment box in perspective view with the mounting appliances thereof according to the invention.
- Figure 3: shows a section view along a hollow space in the floor structure having an embedment box mounted.
- Figure 4a: shows a section view transverse to a hollow space in the floor structure with the section taken also through the embedment box.
- Figure 4b: shows an enlargement of the encircled part in Figure 4a.
- Figure 5: shows only the embedment box in perspective view with the mounting appliances thereof according to the invention adjusted for a level position A.
- Figure 6: shows only the embedment box in perspective view with the mounting appliances thereof according to the invention adjusted for a level position D.
- Figure 7: shows a top view of an area of the floor structure having a hollow space wherein an embedment box is mounted.

### Description of the Invention

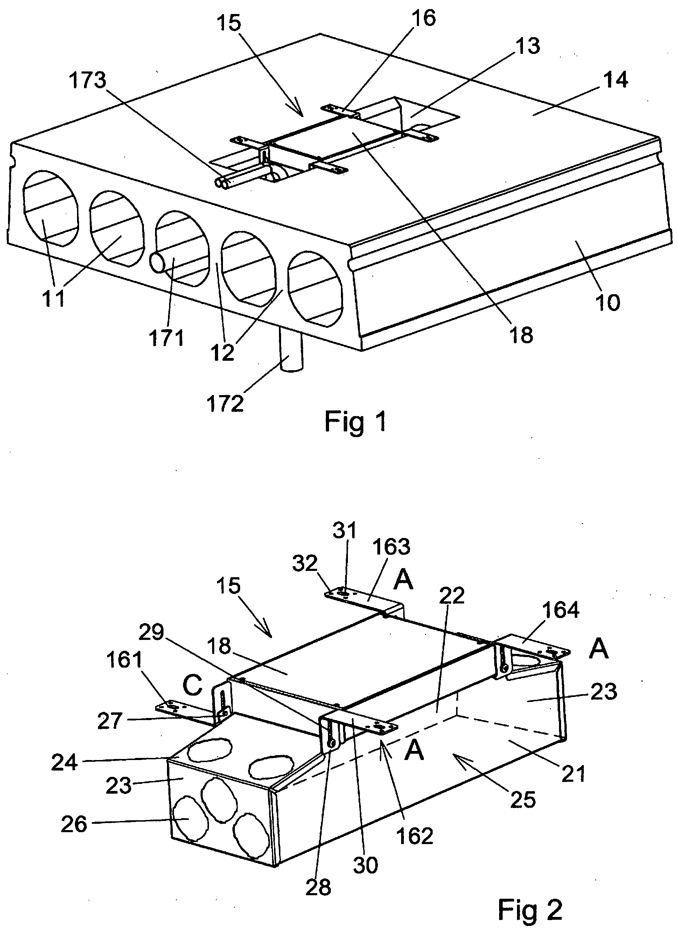

Figure 1 shows a hollow floor structure 10 of concrete, which is provided with longitudinal hollow spaces in the form of channels 11. Between the channels 11, webs 12 are formed, which are the principal force-absorbing part of the hollow floor structure and therefore determine the strength of the floor structure. An embedment hole 13 is recessed in the surface 14 of the hollow floor structure 10 straight above one of the channels 11. In the embedment hole, an embedment box 15 is lowered and attached by means of at least one adjustable mounting bracket 16. The figure shows four identical mounting brackets, which all are mounted onto the embedment box in the same relative position. Furthermore, a wiring tube 171 is connected to the end wall of the embedment box 15 for wiring/cabling to the box. The wiring tube 171 extends through the channel 11 in the hollow floor structure 10 in which the embedment box 15 is mounted. The figure also shows that second wiring tubes 172 may be connected to the embedment box 15 from the bottom wall thereof and thereby extend out through the bottom of the channel of the hollow floor structure. Also third wiring tubes 173 may be connected to the embedment box 15 from the top wall thereof and thereby extend upward and out through the embedment hole 13. Thus, different types of wiring tubes may be connected to different side walls of the embedment box and extend out through the hollow floor structure in several conceivable ways. The embedment box 15 is furthermore provided with an upper part 18 connected to the top wall of the embedment box 15.

Figure 2 shows the proper embedment box 15, which is provided with a bottom wall 21, side walls 22, and end walls 23 as well as a top wall 24 on each side of the upper part 18 of the embedment box. Hereby, the walls limit the inner volume 25 of the box, which can be reached via the upper part 18. The figure also shows that the embedment box is provided with breakout openings 26 placed in the end wall 23 as well as in the top walls 24. As previously mentioned, also the bottom wall may be provided with such breakout openings. The embedment box 15 is provided with four bracket attachments 27 symmetrically placed around the upper part 18. Four adjustable mounting brackets 161, 162, 163, 164 are mounted onto said bracket attachments by a screw, each one of which brackets is formed as an L-shaped means having a first branch 28, provided with a slot-shaped position hole 29 for the fastening to said bracket attachment 27, as well as a second branch 30, oriented 90° from the first branch and provided with at least one fixing hole 31 for the fastening to the surface of the hollow floor structure.

Also the fixing hole 31 of the second branch 30 is formed as a slot having an extension in the direction of the second branch. As also is shown in the figure, the second branch is further provided with four additional fixing holes 32, which are placed laterally displaced as well as longitudinally displaced in the branch in relation to said slot-shaped fixing hole.

By the fact that the position hole 29 of the first branch 28 is formed as a slot, the mounting bracket can be displaced to the two end positions of the slot, which define two different mounting levels of the embedment box in relation to the surface of the hollow floor structure. Furthermore, the mounting bracket can be rotated 180° around its bracket attachment, wherein two additional mounting levels defined are usable. In one embodiment, said levels are fixed to A = 0, B = 25 mm, C = 50 mm and D = 75 mm. The figure shows the first mounting bracket 161 in the position C and the second 162, the third 163, and the fourth mounting bracket 164 in the position A. Since the position hole is formed as a slot, naturally variable mounting positions are feasible. An alternative to said slots is to provide the first branch with two holes, suitably at a distance from each other of 25 mm in order to achieve the same discrete four positions. Both the slot and possible holes are centrally placed in the branch, oriented longitudinally. As is seen in the figure, the mounting brackets are fixed to the embedment box in their respective positions by means of a fixing screw.

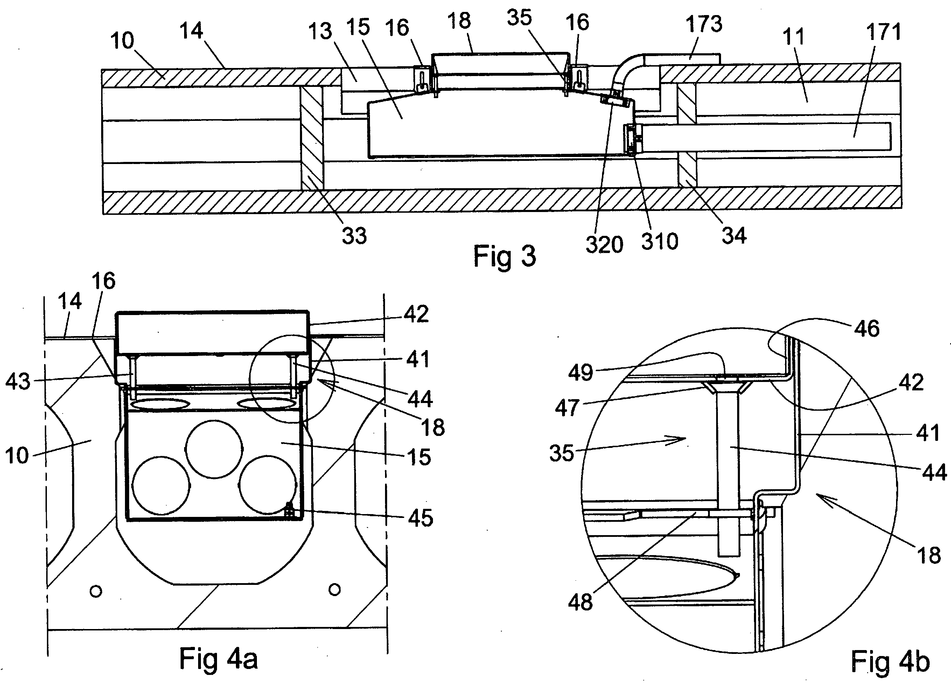

Figure 3 shows a longitudinal section through an embedment box 15 mounted in a hollow floor structure 10. The mounting brackets 16 of the embedment box have been mounted in one suitable position of the four discrete positions, i.e., the separated positions, wiring tubes 171, 173 having been mounted to a first tube adapter 310 in the breakout opening of an end wall as well as to a second tube adapter 320 in the breakout opening of a top wall in the embedment box 15. Next, the embedment box 15 is lowered into the embedment hole 13, wherein it is anchored via the mounting brackets in the surface 14 of the hollow floor structure. Next, the channel 11 of the hollow floor structure is sealed on both sides of the embedment box 15 by a homogeneous first pour stop 33 and a tube-penetrable second pour stop 34, which pour stops block flowing concrete from running out into the channel when the embedment hole 13 is filled with concrete up to the level of the surface 14 of the hollow floor structure. In the mounting case shown in the figure, wiring tubes 173 are mounted to the embedment box to run on top of said surface 14, either parallel to the channels or at some angle to the same, for instance 90°, and therefore concrete should be filled up to or above the level of the tubes either in the same filling step or upon an extra filling-up step. In order to accomplish an exact adjustment of the upper part 18 of the embedment box in relation to the finished concrete floor, the upper part 18 is variably adjustable by a levelling device 35. In the embodiment illustrated, levelling of the upper part can be effected in the interval of 0-25 mm, wherein fine adjustment can be made variably into positions between said four discrete positions of the embedment box. Thus, in the figure, the upper part 18 is levelled to a position wherein a replenishment of concrete can be made above the wiring tube 173 and on a level with the upper part. In order to accomplish a horizontal mounting of the upper part, the same is provided with levelling in all four corners.

Figure 4a shows a cross-section through a hollow floor structure 10 and an embedment box 15 mounted therein. The upper part 18 consists of a base part 41 and a top part 42, the figure showing that the top part has been levelled to a level that is situated above the surface 14 of the floor structure and the mounting brackets 16 by means of the levelling screws 43, 44. Since the embedment box 15 will contain electrical equipment, the bottom of the box is internally provided with a ground connection 45.

Figure 4b shows a detailed view of the levelling device 35. The figure shows the base part 41 of the upper part 18 and the top part 42 thereof inside which a cover lid 46 is inserted to protect the top part from dirt and the like. The under side of the base part is provided with a screw holder 47 in which a levelling screw 44 is secured but can rotate. The levelling screw is provided with threads, which co-operate with the corresponding levelling threads of a holder device 48 in the embedment box. Furthermore, the top part 42 is provided with a levelling hole 49 through which a screwdriver can reach the head of the levelling screw in order to rotate the screw and in such a way adjust the level of the top part 42 of the upper part 18. Also the upper side of the cover lid 46 is provided with a hole oriented in line with the levelling hole 49 for allowing levelling to be made without removing the cover lid.

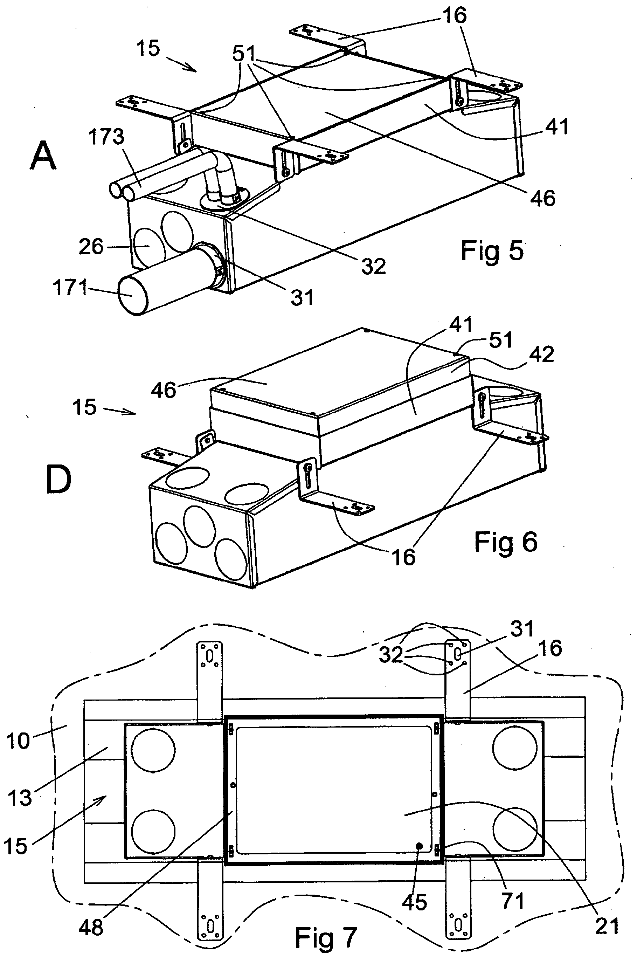

Figure 5 shows the embedment box 15 with wiring tubes 171, 173, so-called VP tubes, in two dimensions connected to the box via tube adapters 31, 32 that are mounted in breakout openings 26. The mounting brackets 16 are mounted in their top position A, i.e., for the lowest possible mounting of the embedment box. The levelling of the top part of the upper part is adjusted to its lowest level by the four levelling screws having been rotated to said level by a screwdriver through the four holes 51 in the cover lid 46. In this connection, the top part is downwardly adjusted and is inside the base part 41.

Figure 6 shows the embedment box 15 with the mounting brackets 16 mounted in their lowermost position D, i.e., for the highest possible mounting of the embedment box. Furthermore, the levelling of the top part 42 is adjusted to its highest level in relation to the base part 41 by means of the levelling screws through the holes 51. With the mounting levels and adjustment intervals indicated above, this implies that the level of the top part 42 and of the cover lid 46 is lying 100 mm above the surface of the hollow floor structure of the embodiment shown when the embedment box 15 is mounted.

By the fact that the levelling screws are four in number and placed in each corner of the upper part, the level of the top part and the cover lid can accordingly be adjusted by means of laser measuring devices to become completely horizontal.

Figure 7 shows a top view of the embedment box 15 mounted in the embedment hole 13 of the hollow floor structure 10. One fixing hole 31 of the mounting brackets 16 is slot-shaped while the other fixing holes 32 are circular and laterally and longitudinally displaced in relation to the slot-shaped fixing hole 31. The cover lid of the upper part is removed and shows a levelling thread 71 of the holder device 48, which levelling thread co-operates with the previously described levelling screws. The holder device 48 acts in addition on one hand as fitting frame in which outlets are mounted and on the other hand as mounting appliance for the floor box that later, after flooring has been laid-out, is mounted in the embedment box. The figure also shows the ground connection 45 on the bottom wall 21 of the box.

A method for the mounting of an embedment box of a hollow floor structure is effected according to the following steps where indicated reference numerals relate to the drawing figures:
1. Either before or after the hollow floor structure has been lifted in place, an embedment hole 13 is recessed in the hollow floor structure 10 with a width that does not exceed the width of the hollow space width of the floor structure, wherein said recessed hole does not affect the strength of the floor structure. In one application of the invention, the width is 170 mm. The hole making may accordingly be made on site or in the factory where the hollow floor structure is produced.
2. Next, the number of openings 26 in the embedment box 15 required for the connection of the pipes and tubes appropriate in the application in question are opened. In one embodiment of the embedment box, there are six holes in its bottom, three holes in a short side and four holes in its upper side.
3. Next, tube adapters 31, 32 are mounted in the open holes in the box. The tube adapters are snapped-on in the embedment box and are preferably available in the following tube configurations: 2x16, 2×20, 1×25, 1×32, 1×40 and 1×50 mm. In the adapters, there are lock plates that prevent the pipes connected to the adapters from coming loose from the embedment box after mounting. Wiring tubes from the bottom of the embedment box are meant to exit in the false ceiling of the floor plan below. Wiring tubes from the short sides of the embedment box are meant to be fed up into partition walls or in partition walls false ceiling of the floor plan below. Wiring tubes from the front side of the embedment box are meant to be fed on top of the floor structure in those cases the thickness of the self-levelling screed applied after the levelling allows this.
4. Next, the mounting brackets 16 are mounted onto the embedment box 15 for a coarse adjustment of its height to the estimated level of the finished floor. The levels that can be selected depend on how the attachment is placed on the embedment box. In one embodiment, each attachment can be placed in one of the following four positions: A = 0-25 mm; B = 25-50 mm; C = 50-75 mm; D = 75-100 mm.
5. After the mounting of the mounting brackets, the embedment box is lowered into the recessed embedment hole 13 in the hollow floor structure 10.
6. After that, the wiring tubes 171, 172, 173 are connected to the tube adapters. These tubes extend on one hand down to false ceilings and on the other hand into the longitudinal channels 11 in the hollow floor structure 10. From the channels, the wiring tubes may be led up or down in connecting partition walls to the hollow floor structure. The tubes may also be led on the upper side of the floor structure in those cases the layer thickness of the cast-on layer of self-levelling screed/concrete allows this.
7. Next, the position of the embedment box 15 is longitudinally adjusted in the embedment hole 13.
8. After that, the embedment box is fixed in the upper side of the hollow floor structure 10 by screwing or by means of a bolt gun in the preferably prepunched holes of the mounting brackets.
9. After that, the longitudinal channel 11 in the hollow floor structure 10 is closed by pour stops 33, 34 in the form of a plug of mineral wool, foam or another material that prevents concrete from running into the channels in the floor structure.
10. Next, the gap around the embedment box is filled with concrete up to the level of the hollow floor structure.
11. After that, the height of the upper part of the embedment box is fine-adjusted in the interval of 0-25 mm by means of the levelling screws of the upper part, and by said fine adjustment, the adjustable upper part is levelled in place so that it becomes horizontal and is on a level with the finished concrete floor to be made. The levelling screws of the four corners of the upper part of the embedment box make that the upper part can lie completely horizontally with the finished floor.
12. Next, concrete or self-levelling screed is laid out over the floor structure in order to get the finished concrete floor on top of which a carpet or another flooring is laid.
13. After the filling has set, the protective lid of the embedment box is lifted away, outlets being mounted in the fitting frame of the embedment box. Next, the outlets are connected and the lid is put back into the hole to prevent anyone from getting hurt if the hole is open.
14. Next, the flooring is laid on the finished concrete floor, a floor box being mounted in the hole. The fitting frame is now mounted in the floor box in which the frame and then the respective apparatus, such as high- or low-voltage outlet, are mounted.

This described method for mounting is a feasible mounting method within the scope of the invention, but it is also possible that the mounting steps 10, 11 and 12 are carried out simultaneously by, before the mounting step 10, adjusting also the levelling to the final level and after that both filling the gap around the embedment box with concrete and filling up to the final floor level.

## Claims

1. Embedment box (15) of a hollow floor structure (10), which box comprises a bottom wall (21), side walls (22), and end walls (23) as well as at least one top wall (24), which walls limit the inner volume (25) of the box, at least one of said walls being provided with a breakout opening (26) in which a tube adapter (310, 320) is mounted for the connection of a wiring tube (171, 172, 173) for wiring/cabling, and that the top wall (24) is provided with an upper part (18) through which the inner volume of the box can be reached, and that the width of the box is smaller than the width of a channel (11) in the hollow floor structure (10), and that the box (15) is provided with level-fixing means connectable to the hollow floor structure (10), **characterized in that** the outside of the wall of the box is provided with four bracket attachments (27) to each one of which an adjustable mounting bracket (16) as level-fixing means is mounted.

2. Embedment box according to claim 1, **characterized in that** the mounting bracket (16) is rotatably and lockably connected to the bracket attachment (27).

3. Embedment box according to any one of claims 1-2, **characterized in that** the mounting bracket (16) is formed as an L-shaped means having a first branch (28), provided with a position hole (29) for the fastening to said bracket attachment (27), as well as a second branch (30), oriented 90° from the first branch (28) and provided with at least one fixing hole (31) for the fastening to the surface (14) of the hollow floor structure (10).

4. Embedment box according to claim 3, **characterized in that** the position hole (29) of the first branch (28) is formed as a slot having an extension in the direction of the first branch (28).

5. Embedment box according to any one of claims 3-4, **characterized in that** the fixing hole (31) of the second branch (30) is formed as a slot having an extension in the direction of the second branch (30).

6. Embedment box according to claim 5, **characterized in that** the second branch (30) is further provided with an additional one to four fixing holes (32), which are placed laterally displaced in the branch in relation to said fixing hole (31).

7. Embedment box according to any one of claims 1-6, **characterized in that** the four bracket attachments (27) are symmetrically placed in relation to the upper part (18) of the box.

8. Embedment box according to claim 7, **characterized in that** the upper part (18) is rectangularly shaped, the bracket attachments (27) being placed adjacent to the respective corner of the upper part (18).

9. Embedment box according to claim 8, **characterized in that** the upper part (18) is provided with a levelling device (35).

10. Method for the mounting of an embedment box (15) formed according to any one of claims 1-9 in a hollow floor structure (10), **characterized by** the following mounting steps:
a) a hole (13) is recessed in the hollow floor structure (10) with a width that does not exceed the width of the hollow space width of the floor structure but that slightly exceeds the width of the embedment box (15),
b) at least one breakout opening (26) of the embedment box is opened, in which a tube adapter (310) and a wiring tube (171) are mounted,
c) at least one adjustable mounting bracket (16) is mounted onto the embedment box (15) in a selected position for a coarse adjustment of the height of the embedment box in relation to the level of the surface (14) of the hollow floor structure,
d) the embedment box is lowered into the recessed hole (13) in the hollow floor structure as well as is adjusted longitudinally in the hole,
e) the embedment box (15) is fixed in the upper side of the hollow floor structure (10) by means of the mounting bracket (16),
f) the longitudinal channel (11) in the hollow floor structure (15) is closed on both sides of the box,
g) the gap around the embedment box (15) is filled with concrete up to the level of the surface (14) of the hollow floor structure.

11. Method according to claim 10, **characterized in that** the mounting step c) instead concerns: at least one adjustable mounting bracket (16) is mounted onto the embedment box (15) in a selected position for a coarse adjustment of the height of the embedment box in relation to the level of the finished concrete floor, and the mounting step g) instead concerns: concrete is filled into the gap around the embedment box (15) and up to a level corresponding to the finished concrete floor.

12. Method according to any one of claims 10-11, **characterized in that** some of the mounting steps a) to g) comprises that the level of the upper part (18) of the embedment box (15) is fine-adjusted.

## Patentansprüche

1. Einbaudose (15) einer Hohlbodenstruktur (10), wobei die Dose eine untere Wand (21), Seitenwände (22) und Endwände (23) sowie mindestens eine obere Wand (24) umfasst, wobei die Wände das Innenvolumen (25) der Dose eingrenzen, wobei mindestens eine der Wände mit einer Ausbrechöffnung (26) bereitgestellt ist, in der ein Rohradapter (310, 320) zum Verbinden eines verdrahteten Rohrs (171, 172, 173) zum Verdrahten/Verkabeln montiert ist, wobei die obere Wand (24) mit einem oberen Teil (18) bereitgestellt ist, durch den das Innenvolumen der Dose erreicht werden kann, und wobei die Breite der Dose kleiner als die Breite eines Kanals (11) in der Hohlbodenstruktur (10) ist, und wobei die Dose (15) mit Nivellierbefestigungsmitteln bereitgestellt ist, die mit der Hohlbodenstruktur (10) verbunden werden können, **dadurch gekennzeichnet, dass** die Außenseite der Wand der Dose mit vier Bügelbefestigungen (27) bereitgestellt ist, an die jeweils ein verstellbarer Montagebügel (16) als Nivellierbefestigungsmittel montiert werden kann.

2. Einbaudose (15) nach Anspruch 1, **dadurch gekennzeichnet, dass** der Montagebügel (16) drehbar und verriegelbar mit der Bügelbefestigung (27) verbunden ist.

3. Einbaudose nach einem der Ansprüche 1-2, **dadurch gekennzeichnet, dass** der Montagebügel (16) als L-förmiges Mittel mit einem ersten Zweig (28) ausgebildet ist, der mit einem Positionsloch (29) zur Befestigung an der Bügelanordnung (27) bereitgestellt ist, sowie mit einem zweiten Zweig (30), der 90° von dem ersten Zweig (28) ausgerichtet ist und mit mindestens einem Fixierloch (31) zum Befestigen an der Oberfläche (14) der Hohlbodenstruktur (10) bereitgestellt ist.

4. Einbaudose nach Anspruch 3, **dadurch gekennzeichnet, dass** das Positionsloch (29) des ersten Zweigs (28) als Schlitz mit einer Ausdehnung in Richtung des ersten Zweigs (28) ausgebildet ist.

5. Einbaudose nach einem der Ansprüche 3 bis 4, **dadurch gekennzeichnet, dass** das Befestigungsloch (31) des zweiten Zweigs (30) als Schlitz mit einer Ausdehnung in Richtung des zweiten Zweigs (30) ausgebildet ist.

6. Einbaudose nach Anspruch 5, **dadurch gekennzeichnet, dass** der zweite Zweig (30) ferner mit zusätzlichen eins bis vier Befestigungslöchern (32) bereitgestellt ist, die seitlich versetzt in dem Zweig in Bezug auf das Befestigungsloch (31) angeordnet sind.

7. Einbaudose nach einem der Ansprüche 1-6, **dadurch gekennzeichnet, dass** die vier Bügelbefestigungen (27) symmetrisch in Bezug auf den oberen Teil (18) der Dose angeordnet sind.

8. Einbaudose nach Anspruch 7, **dadurch gekennzeichnet, dass** der obere Teil (18) rechteckig geformt ist, wobei die Bügelbefestigungen (27) benachbart zu der zugehörigen Ecke des oberen Teils (18) angeordnet sind.

9. Einbaudose nach Anspruch 8, **dadurch gekennzeichnet, dass** der obere Teil (18) mit einer Nivelliereinrichtung (35) bereitgestellt ist.

10. Verfahren zur Montage einer Einbaudose (15), die nach einem der Ansprüche 1-9 in einer Hohlbodenstruktur (10) ausgebildet wurde, **gekennzeichnet durch** die folgenden Montageschritte:
a) ein Loch (13) wird in der Hohlbodenstruktur (10) mit einer Breite versenkt, die nicht die Breite der Hohlraumbreite der Bodenstruktur überschreitet und welche die Breite der Einbaudose (15) leicht überschreitet,
b) mindestens eine Ausbrechöffnung (26) der Einbaudose wird geöffnet, worin ein Rohradapter (310) und ein verdrahtetes Rohr (171) montiert sind,
c) mindestens ein verstellbarer Befestigungsbügel (16) wird auf der Einbaudose (15) in einer ausgewählten Position für eine Grobeinstellung der Höhe der Einbaudose in Bezug auf die Ebene der Oberfläche (14) der Hohlbodenstruktur montiert,
d) die Einbaudose wird in dem ausgesparten Loch (13) in der Hohlbodenstruktur versenkt und längs in dem Loch eingestellt,
e) die Einbaudose (15) wird in der oberen Seite der Hohlbodenstruktur (10) mittels des Montagebügels (16) befestigt,
f) der Längskanal (11) in der Hohlbodenstruktur (15) wird auf beiden Seiten der Dose geschlossen,
g) der Spalt um die Einbaudose (15) wird mit Beton bis zum Niveau der Oberfläche (14) der Hohlbodenstruktur gefüllt.

11. Verfahren nach Anspruch 10, **dadurch gekennzeichnet, dass** der Montageschritt c) stattdessen betrifft: mindestens ein verstellbarer Montagebügel (16) wird auf der Einbaudose (15) in einer ausgewählten Position für eine Grobeinstellung der Höhe der Einbaudose in Bezug auf die Ebene des abgeschlossenen Betonbodens montiert, und dadurch, dass der Montageschritt g) stattdessen betrifft: Beton wird in den Spalt um die Einbaudose (15) und bis zu einem Niveau hoch gefüllt, das dem fertigen Betonboden entspricht.

12. Verfahren nach einem der Ansprüche 10-11, **dadurch gekennzeichnet, dass** einige der Montageschritte a) bis g) umfassen, dass das Niveau des oberen Teils (18) der Einbaudose (15) präzise eingestellt wird.

## Revendications

1. Boîte d'encastrement (15) d'une structure de plancher creuse (10), ladite boîte comprenant une paroi inférieure (21), des parois latérales (22) et des parois d'extrémité (23) ainsi qu'au moins une paroi supérieure (24), lesdites parois limitant le volume intérieur (25) de la boîte, au moins une desdites parois comportant une ouverture à rompre (26) dans laquelle un adaptateur de tube (310, 320) est monté pour la connexion d'un tube de câblage (171, 172, 173) pour un fil/câble, et la paroi supérieure (24) comprend une partie supérieure (18) à travers laquelle il est possible d'accéder au volume intérieur de la boîte, et la largeur de la boîte est plus petite que la largeur d'un canal (11) dans la structure de plancher creuse (10), et la boîte (15) est pourvue de moyens de fixation à niveau pouvant être connectés à la structure de plancher creuse (10), **caractérisée en ce que** l'extérieur de la paroi de la boîte est pourvu de quatre attaches de console (27) sur chacune desquelles une console de montage réglable (16) faisant office de moyens de fixation à niveau est montée.

2. Boîte d'encastrement selon la revendication 1, **caractérisée en ce que** la console de montage (16) est connectée de façon rotative et verrouillable à l'attache de console (27).

3. Boîte d'encastrement selon l'une quelconque des revendications 1 ou 2, **caractérisée en ce que** la console de montage (16) est formée comme un moyen en forme de L présentant une première branche (28), comportant un trou de positionnement (29) pour la fixation à ladite attache de console (27), ainsi qu'une deuxième branche (30), orientée à 90° par rapport à la première branche (28) et comportant au moins un trou de fixation (31) pour la fixation à la surface (14) de la structure de plancher creuse (10).

4. Boîte d'encastrement selon la revendication 3, **caractérisée en ce que** le trou de positionnement (29) de la première branche (28) est formé comme une fente présentant une extension dans la direction de la première branche (28).

5. Boîte d'encastrement selon l'une quelconque des revendications 3 ou 4, **caractérisée en ce que** le trou de fixation (31) de la deuxième branche (30) est formé comme une fente présentant une extension dans la direction de la deuxième branche (30).

6. Boîte d'encastrement selon la revendication 5, **caractérisée en ce que** la deuxième branche (30) comporte en outre de un à quatre trou(s) de fixation supplémentaire(s) (32), qui est (sont) placé(s) de façon latéralement décalée dans la branche par rapport audit trou de fixation (31).

7. Boîte d'encastrement selon l'une quelconque des revendications 1 à 6, **caractérisée en ce que** les quatre attaches de console (27) sont disposées de façon symétrique par rapport à la partie supérieure (18) de la boîte.

8. Boîte d'encastrement selon la revendication 7, **caractérisée en ce que** la partie supérieure (18) est de forme rectangulaire, les attaches de console (27) étant placées à proximité du coin respectif de la partie supérieure (18).

9. Boîte d'encastrement selon la revendication 8, **caractérisée en ce que** la partie supérieure (18) est pourvue d'un dispositif de mise à niveau (35).

10. Procédé de montage d'une boîte d'encastrement (15) formée selon l'une quelconque des revendications 1 à 9 dans une structure de plancher creuse (10), **caractérisé en ce qu'**il comprend les étapes de montage suivantes:
a) un trou (13) est creusé dans la structure de plancher creuse (10) avec une largeur qui n'est pas plus grande que la largeur de l'espace creux de la structure de plancher mais qui est légèrement plus grande que la largeur de la boîte d'encastrement (15),
b) au moins une ouverture à rompre (26) de la boîte d'encastrement est ouverte, dans laquelle un adaptateur de tube (310) et un tube de câblage (171) sont montés,
c) au moins une console de montage réglable (16) est montée sur la boîte d'encastrement (15) dans une position sélectionnée pour un réglage approximatif de la hauteur de la boîte d'encastrement par rapport au niveau de la surface (14) de la structure de plancher creuse,
d) la boîte d'encastrement est abaissée dans le trou creusé (13) dans la structure de plancher creuse et est également ajustée de façon longitudinale dans le trou,
e) la boîte d'encastrement (15) est fixée dans le côté supérieur de la structure de plancher creuse (10) au moyen de la console de montage (16),
f) le canal longitudinal (11) dans la structure de plancher creuse (15) est fermé sur les deux côtés de la boîte, et
g) l'espace autour de la boîte d'encastrement (15) est rempli de béton jusqu'au niveau de la surface (14) de la structure de plancher creuse.

11. Procédé selon la revendication 10, **caractérisé en ce que** l'étape de montage c) implique à la place qu'au moins une console de montage réglable (16) est montée sur la boîte d'encastrement (15) dans une position sélectionnée pour un réglage approximatif de la hauteur de la boîte d'encastrement par rapport au niveau du plancher de béton fini, et l'étape de montage g) implique à la place que du béton est versé dans l'espace autour de la boîte d'encastrement (15) et jusqu'à un niveau qui correspond au plancher de béton fini.

12. Procédé selon l'une quelconque des revendications 10 ou 11, **caractérisé en ce que** plusieurs des étapes a) à g) prévoient que le niveau de la partie supérieure (18) de la boîte d'encastrement (15) fait l'objet d'un réglage de précision.
